(19) Europäisches Patentamt
European Patent Office
Office européen des brevets

(11) Veröffentlichungsnummer: **0 044 996**
**B1**

# (12) EUROPÄISCHE PATENTSCHRIFT

(45) Veröffentlichungstag der Patentschrift: **06.06.84**

(51) Int. Cl.³: **D 06 L 3/12**

(21) Anmeldenummer: **81105460.0**

(22) Anmeldetag: **13.07.81**

## (54) Mischungen von optischen Aufhellern.

(30) Priorität: **19.07.80 DE 3027479**

(43) Veröffentlichungstag der Anmeldung: **03.02.82 Patentblatt 82/5**

(45) Bekanntmachung des Hinweises auf die Patenterteilung: **06.06.84 Patentblatt 84/23**

(84) Benannte Vertragsstaaten: **AT BE CH DE FR GB IT LI NL SE**

(56) Entgegenhaltungen:
**EP - A - 0 006 271**
**FR - A - 1 601 823**
**FR - A - 2 356 761**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Martini, Thomas, Dr., Odenwaldstrasse 5, D-6233 Kelkheim (Taunus) (DE)**
Erfinder: **Schinzel, Erich, Dr., Ostpreussenstrasse 43, D-6238 Hofheim am Taunus (DE)**
Erfinder: **Frischkorn, Hans, Dr., Martin-Wohmann-Strasse 3, D-6238 Hofheim am Taunus (DE)**
Erfinder: **Friedrich, Herbert, Dr., Stettiner Strasse 95, D-6056 Heusenstamm (DE)**
Erfinder: **Probst, Heinz, Bliltalstrasse 3, D-6231 Sulzbach (DE)**

**EP 0 044 996 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der EP-A-0 006 271 findet sich ein allgemein gehaltener Hinweis auf Mischungen von optischen Aufhellern unterschiedlicher Struktur. Dieser Hinweis läßt aber nicht die besondere Bedeutung solcher Mischungen erkennen, die als eine Komponente einen Aufheller aus der Reihe des Bisbenzoxazolyl-naphthaline enthalten.

Gegenstand der vorliegenden Erfindung sind Mischungen von optischen Aufhellern bestehend aus 1 bis 60 Gewichts-% einer Verbindung der Formel (1)

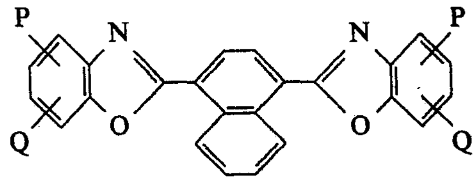
(1)

in welcher P und Q unabhängig voneinander Halogen, Alkyl, Phenyl, Carbalkoxy, Alkylsufonyl oder Trifluormethyl, vorzugsweise Wasserstoff bedeuten,

und 99 bis 40 Gewichts-% einer oder mehrerer Verbindungen der Formel (2) bis (10),

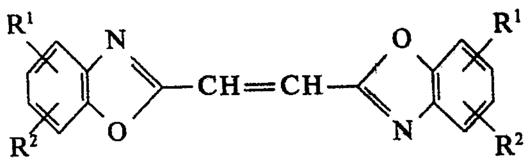
(2)

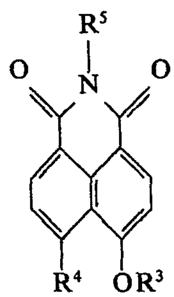
(3)

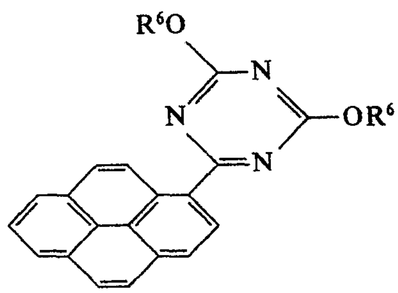
(4)

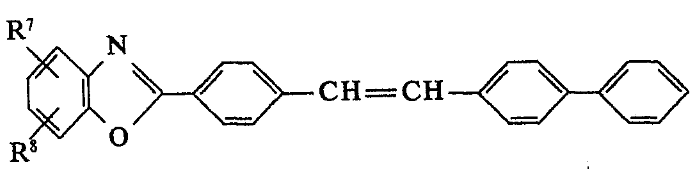
(5)

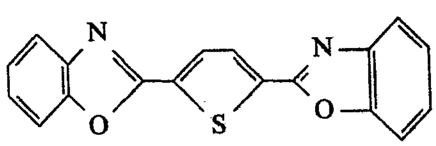
(6)

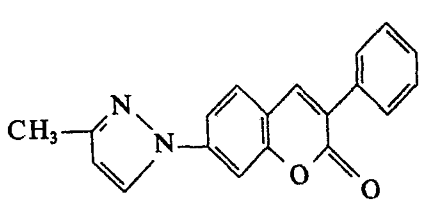
(7)

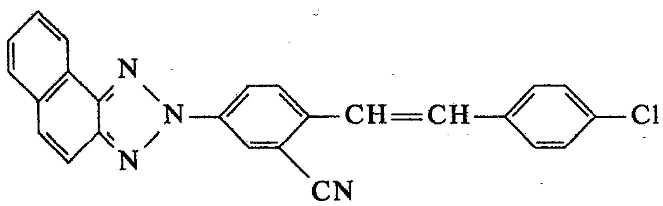

(8)

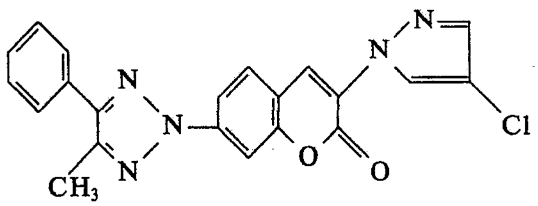

(9)

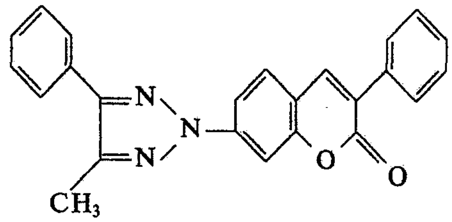

(10)

in welchen $R^1$ und $R^2$ unabhängig voneinander Wasserstoff oder Alkyl, $R^3$ Alkyl oder Alkoxyalkyl, $R^4$ Wasserstoff oder Alkoxy, $R^5$ Alkyl, Hydroxyalkyl, Alkoxyalkyl oder Aralkyl, $R^6$ Alkyl, $R^7$ und $R^8$ Wasserstoff oder Alkyl bedeuten.

Bei den Verbindungen der Formeln (1) und (2) sind solche bevorzugt, wo die Substituenten in 5,6-Stellung am Benzoxazolylring sitzen; bei den Verbindungen der Formel (5) sind diejenigen bevorzugt, die die Substituenten in 5,6- oder in 5,7-Stellung haben. Alkyl- und Alkoxygruppen enthalten jeweils 1 bis 4 C-Atome. Als Aralkylgruppe ist Benzyl bevorzugt.

Das Mischungsverhältnis der Aufheller liegt zwischen 1 bis 60 Gewichts-% der Verbindung der Formel (1) und entsprechend 99 bis 40 Gewichts-% der Verbindungen der Formeln (2) bis (10). Das optimale Mischungsverhältnis hängt im Einzelfall von der Art der jeweiligen Verbindungen unter den Formeln (1) bis (10) ab und läßt sich durch einfache Versuche unschwer ermitteln. Bevorzugt ist ein Mischungsverhältnis von 2 bis 95 Gewichts-% der Verbindungen der Formel (1) und entsprechend 75 bis 98 Gewichts-% der Verbindungen der Formeln (2) bis (10). Anstelle nur jeweils einer einzigen Verbindung unter den Formeln (2) bis (10) kann man auch Mischungen dieser Verbindungen untereinander nehmen, wobei hier das Mischungsverhältnis dieser Verbindungen (2) bis (10) völlig unkritisch ist und jeden beliebigen Wert annehmen kann. Von den Verbindungen der Formeln (2) bis (10) sind diejenigen der Formeln (2) und (3) bevorzugt.

Wie bei optischen Aufhellern üblich, werden die einzelnen Komponenten durch Dispergierung in einem Lösungsmittel in die Handelsform gebracht. Man kann dabei die einzelnen Komponenten jede für sich dispergieren und dann die beiden Dispersionen zusammen geben. Man kann aber auch die beiden Einzelkomponenten in Substanz miteinander mischen und dann gemeinsam dispergieren. Dieser Dispergiervorgang geschieht in üblicher Weise in Kugelmühlen, Kolloidmühlen, Perlmühlen oder Dispersionsknetern.

Die erfindungsgemäßen Mischungen eignen sich besonders zum Aufhellen von Textilmaterial aus linearen Polyestern, Polyamiden und Acetylcellulose. Man kann diese Mischungen aber auch mit gutem Ergebnis bei Mischgeweben verwenden, die aus linearen Polyestern und anderen synthetischen oder natürlichen Faserstoffen namentlich hydroxylgruppenhaltigen Fasern, insbesondere Baumwolle bestehen. Die Applikation dieser Mischungen geschieht dabei unter den für die Anwendung von optischen Aufhellern üblichen Bedingungen so beispielsweise nach dem Ausziehverfahren bei 90° C bis 130° C mit oder ohne Zusatz von Beschleunigern (Carriern) oder nach dem Thermosolverfahren. Die in Wasser unlöslichen Aufheller und die erfindungsgemäßen Mischungen können auch in organischen Lösemitteln z. B. Perchloräthylen, fluorierten Kohlwasserstoffen gelöst zum Einsatz kommen. Dabei kann das Textilmaterial im Ausziehverfahren mit der Lösemittelflotte, welche den optischen Aufheller gelöst enthält, behandelt werden, oder man imprägniert, pflatscht, sprüht das Textilgut mit der aufhellerhaltigen Lösemittelflotte und trocknet anschließend bei Temperaturen von 120—220° C, wobei der optische Aufheller dabei restlos in der Faser fixiert wird.

Die erfindungsgemäßen Mischungen haben den Vorteil, daß bereits durch den Zusatz von relativ

geringen Mengen des Aufhellers der Formel (1) außergewöhnlich hohe Weißgradsteigerungen der Aufheller (2)—(10) erzielt werden. Diese Weißgradsteigerungen bedeuten eine erhebliche Einsparung an Aufheller-Substanz. Beispielsweise benötigt man im Falle einer Mischung aus jeweils 90% einer Verbindung der Formel (2) oder (3) und 10% einer Verbindung der Formel (1) etwa die Hälfte an Wirksubstanz im Vergleich zu den reinen Verbindungen (2) bzw. (3).

## Beispiel 1

100 mg des Aufhellers der Formel

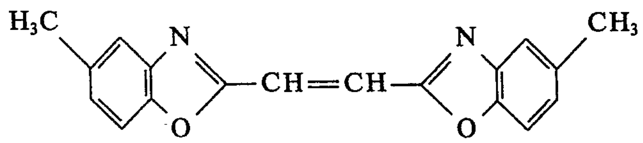

(2)

bzw. 100 mg eines Gemisches aus diesem Aufheller und einem Aufheller der Formel

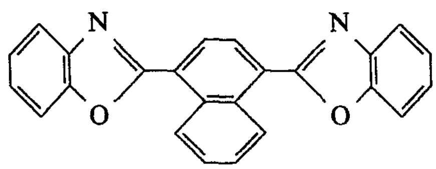

(1)

werden in 5 ml Dimethylformamid gelöst und mit 5 ml eines Dispergiermittels versetzt. Die erhaltene Lösung wird dann in eine solche Menge Wasser eingerührt, daß die entstandene Dispersion eine Konzentration von 1 g/l an Wirksubstanz enthält. Eine Gewebe aus Polyesterstapelfaser wird mit dieser Dispersion getränkt, zwischen Walzen auf eine Feuchtigkeitsgehalt von 80%, bezogen auf das Warengewicht, abgequetscht, bei 110°C getrocknet und bei 170°C 40 Sek. lang thermosoliert. Die damit erzielten Weißgrade nach Ganz sind in der folgenden Tabelle zusammengefaßt:

| | | | | |
|---|---|---|---|---|
| Aufheller (1) Gew.-Teile | 0 | 10 | 20 | 30 |
| Aufheller (2) Gew.-Teile | 100 | 90 | 80 | 70 |
| Weißgrad (Ganz) | 186 | 206 | 214 | 216 |

## Beispiel 2

Eine 23%ige handelsübliche Dispersion des Aufhellers der Formel

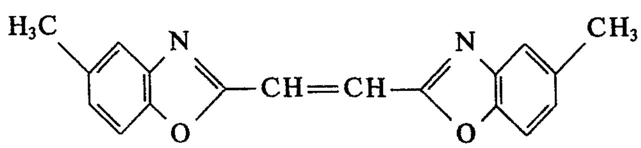

(2)

und eine ca. 10%ige Polyvinylalkohol-Dispersion des Aufhellers der Formel

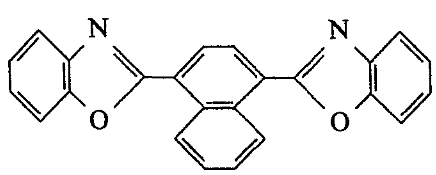

(1)

werden in einem solchen Verhältnis miteinander gemischt und verdünnt, daß man insgesamt eine 7%ige Dispersion erhält, die 10 Gew.-Teile des Aufhellers 1 und 90 Gew.-Teile des Aufhellers 2 enthält. Mit dieser Dispersion wird Gewebe aus Polyesterstapelfaser nach dem HT-Verfahren in Gegenwart von 2,5 g/l $NaClO_2$ (50%ig) und 1 g/l eines Dispergiermittels im Flottenverhältnis 1 : 20 60 Min. bei 110°C behandelt. Man erhält dabei folgende Weißgrade nach Berger (WB) bzw. Stensby (WS)

| Gew.-% Aufheller-Wirksubstanz bezogen auf das Warengewicht | Aufhellermischung (1) und (2) WB | WS | Nur Aufheller (2) WB | WS |
|---|---|---|---|---|
| 0,5 | 144 | 150 | 140 | 147 |
| 0,71 | 147 | 152 | 143 | 150 |
| 1,02 | 149 | 155 | 146 | 152 |
| 1,43 | 152 | 157 | 147 | 154 |
| 2,0 | 154 | 158 | 149 | 155 |

Die höheren Weißgrade der Mischung zeigen den Vorteil gegenüber der Einzelkomponente der Formel (2).

Beispiel 3

Eine 10%ige Polyvinylalkohol-Dispersion der Verbindung der Formel

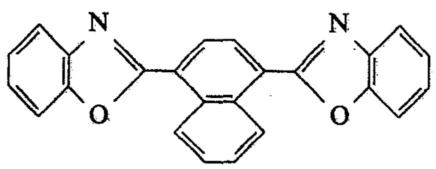

(1)

wird mit einem handelsüblichen Aufheller der Formel

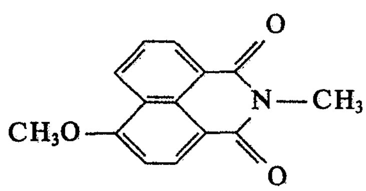

(3)

so vermischt, daß man Mischungen der Aufheller (1) und (3) in den Verhältnissen 10 : 90, 20 : 80 und 70 : 30 erhält. Man setzt mit diesen Mischungen 1%ige Aufheller-Flotten an in der Weise wie in Beispiel 1 beschrieben und behandelt mit diesen Flotten Gewebe aus Polyesterstapelfasern ebenfalls wie in Beispiel 1 beschrieben. Es wird 30 Sek. bei 200° C thermosoliert. Dabei werden folgende Weißgrade nach Berger (WB) bzw. Stensby (WS) erhalten.

| | Aufhellermischung im Verhältnis (1) (3) 10 : 90 | (1) (3) 20 : 80 | (1) (3) 30 : 70 | (1) (3) 0 : 100 |
|---|---|---|---|---|
| WB | 147 | 152 | 155 | 134 |
| WS | 144 | 147 | 159 | 135 |

Man ersieht eindeutig den Vorteil der Mischungen gegenüber der mengenmäßig gleich eingesetzten Verbindung (3).

Beispiel 4

Aus 5 Gew.-Teilen des Aufhellers der Formel

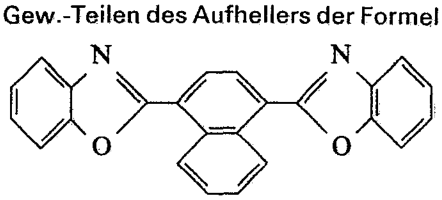

(1)

und 95 Gew.-Teilen des Aufhellers der Formel

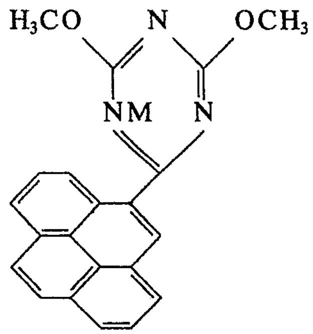

(4)

wird eine Flotte hergestellt wie in Beispiel 1 beschrieben mit einem Gehalt von 1 g/l des Gemischs der beiden Aufheller. Gewebe aus Polyesterstapelfasern wird mit dieser Flotte wie in Beispiel 1 beschrieben geklotzt und 30 Sek. bei 200° C thermosoliert. Das so behandelte Gewebe zeigt einen Weißgrad Berger von 158 und einen Weißgrad Stensby von 154. Mit der gleichen Menge allein des Aufhellers (4) erreicht man nun einen Weißgrad Berger von 156 bzw. Weißgrad Stensby von 153. Die durch die Mischung erzielte Weißgradsteigerung ist auch visuell eindeutig nachzuweisen.

Beispiel 5

Eine handelsübliche ca. 20%ige Dispersion der Aufhellers der Formel

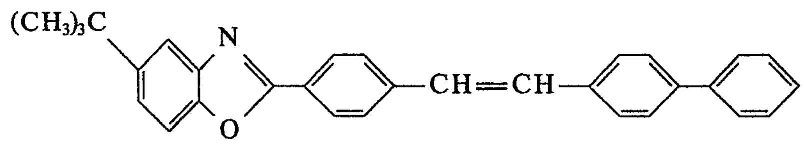

(5)

wird mit einer 10%igen Polyvinylalkohol-Dispersion des Aufhellers der Formel

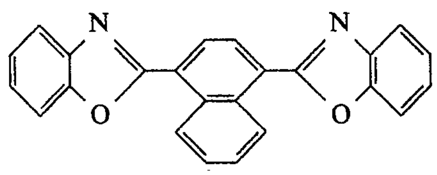

(1)

so gemischt und verdünnt, daß man eine 10%ige Dispersion mit 80 bzw. 70 Gew.-Teilen des Aufhellers der Formel (5) und 20 bzw. 30 Gew.-Teilen des Aufhellers der Formel (1) erhält. Diese Dispersion wird auf einen Gehalt von 1 g/l der beiden Aufheller insgesamt verdünnt und diese Flotte wird wie in Beispiel 1 angegeben auf Polyester appliziert. Man erhält folgende Weißgrade nach Berger (WB) und Stensby (WS)

| | Aufhellermischung im Verhältnis (5) (1) 80 : 20 | (5) (1) 70 : 30 | nur Aufheller (5) |
|---|---|---|---|
| WB | 157 | 159 | 151 |
| WS | 151 | 152 | 147 |

Gegenüber dem reinen Aufheller (5) ergeben die Mischungen eindeutig einen brillanteren Effekt.

Beispiel 6

Die handelsübliche ca. 20%ige Dispersion des Aufhellers (6) wird mit einer ca. 8%igen Polyvinyldispersion des Aufhellers der Formel

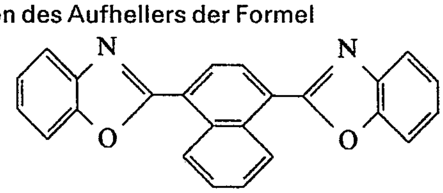

(1)

so gemischt, daß man Klotzflotten mit den in der folgenden Tabelle angegebenen Konzentrationen der beiden Aufheller erhält. Mit diesen Klotzflotten wird Gewebe aus Polyesterstapelfasern unter den Bedingungen des Beispiels 1 behandelt. Man erhält so folgende Weißgrade

| Konzentration Aufheller in g/l (6) | (1) | Weißgrad Berger | Weißgrad Stensby |
|---|---|---|---|
| 0,48 | 0,32 | 157 | 149 |
| 0,4 | 0,4 | 157 | 150 |
| 0,32 | 0,48 | 159 | 151 |
| 0,8 | — | 148 | 144 |
| — | 0,8 | 155 | 149 |

Die Weißgrade zeigen, daß hier ein ausgeprägter Synergismus vorliegt.

Beispiel 7

Eine handelsübliche Dispersion von 68 Gew.-% eines Aufhellers der Formel (7) und 32 Gew.% eines Aufhellers der Formel (8) wird mit einer 8%igen Polyvinylakohol-Dispersion des Aufhellers der Formel (1) (P und Q = H) so abgemischt, daß man Mischungen erhält, die jeweils 10, 20 oder 30 Gew.-% des Aufhellers der Formel (1) enthalten und entsprechend 90, 80 oder 70 Gew.-% des oben genannten Gemisches der Aufheller (7) und (8). Man verdünnt diese Dispersionen auf einen Gehalt von 10 g/l und appliziert diese Flotte auf Polyesterstapelfasern wie in Beispiel 1 angegeben. Es wird 30 Sek. bei 200° C thermosoliert. Man erhält folgende Weißgrade:

| Mischung mit X Gew.-% des Aufhellers (1) X | Weißgrad Berger | Weißgrad Stensby |
|---|---|---|
| 10 | 153 | 150 |
| 20 | 155 | 151 |
| 30 | 156 | 151 |

Unter den gleichen Bedingungen zeigt die oben genannte Mischung der Aufhellung (7) und (8) ohne den Aufheller (1) Weißgrade von 149 (Berger) bzw. 148 (Stensby). Durch den Zusatz des Aufhellers erzielt man eine Nuance, die deutlich blauer ist als bei der Mischung allein aus den Aufhellern (7) und (8).

Beispiel 8

Eine handelsübliche ca. 8,5%ige Einstellung des Aufhellers der Formel (9) wird mit einer 8%igen Polyvinylalkohol-Dispersion des Aufhellers der Formel (1) (P = Q = H) so gemischt, daß man eine Dispersion erhält mit 90 bzw. 80 Gew.-% des Aufhellers (9) und 10 bzw. 20 Gew.-% des Aufhellers (1). Diese Dispersionen werden auf einen Gehalt von 10 g/l an Aufhellersubstanz verdünnt und mit dieser Flotte wird, wie in Beispiel 1 beschrieben, ein Polyestergewebe behandelt. Die Thermosolierung erfolgte bei 200° C und 40 Sek. Folgende Weißgrade werden so erzielt:

| Aufhellermischung (9) | (1) | Weißgrad Berger | Stensby |
|---|---|---|---|
| 90% | 10% | 158 | 155 |
| 80% | 20% | 160 | 156 |

Mit der gleichen Menge allein des Aufhellers (9) erreicht man nur Weißgrade von 156 (Berger) bzw. 154 (Stensby).

Beispiel 9

Ersetzt man in Beispiel 8 den Aufheller (9) durch den Aufheller der Formel (10) so erhält man bei sonst gleicher Arbeitsweise folgende Weißgrade:

| Aufhellermischung (10) | (1) | Weißgrad Berger | Stensby |
|---|---|---|---|
| 90% | 10% | 154 | 148 |
| 80% | 20% | 156 | 149 |

Mit der gleichen Menge allein des Aufhellers (10) erreicht man nur Weißgrade von 153 (Berger) bzw. 147 (Stensby).

Beispiel 10

In einem geschlossenen Gefäß werden 0,05 Gew.-%, bezogen auf das Warengewicht des aufzuhellenden Triacetatgewebes (5 g), des Aufhellers der Formel (3)

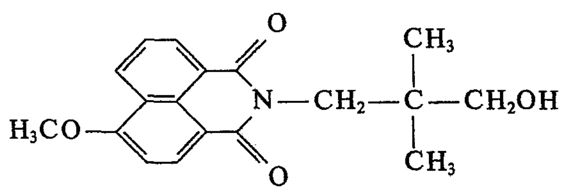

(3)

dispergiert wie in Beispiel 1 beschrieben. Mit dieser Dispersion wird das Triacetatgewebe im Flottenverhältnis 1 : 20 60 Minuten bei 98° C behandelt unter Zusatz von 2 g/l 80%iges Nc-Chlorit, 49 g/l eines handelsüblichen Puffersalzes und 1 ml/l 10%ige Essigsäure.

Der gleiche Versuch wird mit 0,05 Gew.-%, bezogen auf das Warengewicht, mit einer Mischung aus 90 Gew.-% des Aufhellers der obigen Formel (3) und 10 Gew.-% des Aufhellers der Formel (1) (P = Q = H) durchgeführt.

Die gemessenen Weißgrade ergeben eindeutig den Vorteil der Mischung

| | WB | WS |
|---|---|---|
| Aufheller 3 allein | 125 | 126 |
| Mischung aus Aufheller 1 und 3 (10% : 90%) | 129 | 129 |

Verwendet man 1 Gew.-%, bezogen auf das Warengewicht, des Aufhellers (3) bzw. des Aufhellergemisches so erhält man folgende Weißgrade

| | WB | WS |
|---|---|---|
| Aufheller 3 allein | 131 | 132 |
| Mischung aus Aufheller 1 und 3 (10% : 90%) | 135 | 135 |

Beispiel 11

Wie unter Beispiel 1 beschrieben wird Polyester-Gewebe mit 1 g/l des Aufhellers der Formel (3) bzw. eines Aufhellergemisches aus 90 Gew.-% des Aufhellers (3) und 10 Gew.-% des Aufhellers (1) behandelt und 40 Sek. bei 180° C thermosoliert.

Es wurden folgende Weißgrade gemessen

| | WB | WS |
|---|---|---|
| Aufheller 3 allein | 135 | 135 |
| Mischung aus Aufheller 3 und 1 (90% : 10%) | 142 | 140 |

**Patentansprüche**

1. Mischungen von optischen Aufhellern bestehend aus 1 bis 60 Gewichts-% einer Verbindung der Formel (1)

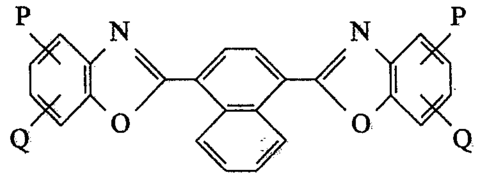

(1)

in welcher P und Q unabhängig voneinander Halogen, Alkyl, Phenyl, Carbalkoxy, Alkylsulfonyl oder Trifluormethyl, vorzugsweise Wasserstoff bedeuten, und 99 bis 40 Gewichts-% einer oder mehrerer Verbindungen der Formel (2) bis (10),

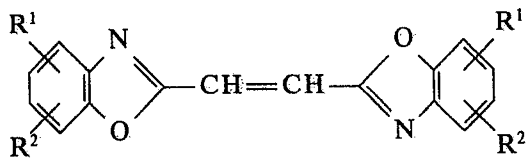

(2)

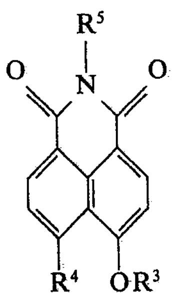

(3)

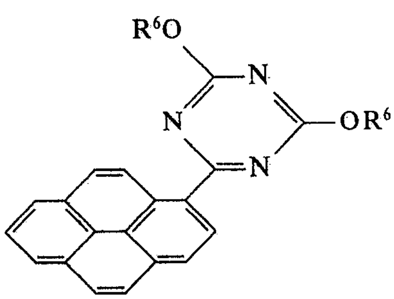

(4)

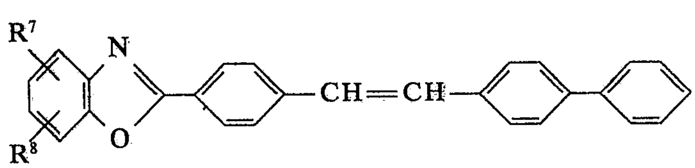

(5)

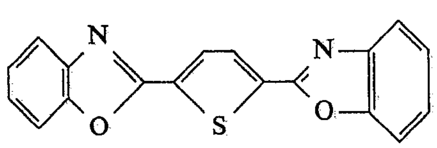

(6)

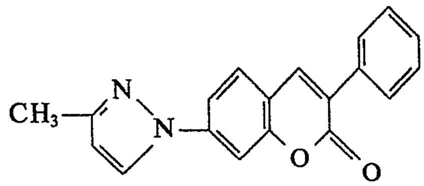

(7)

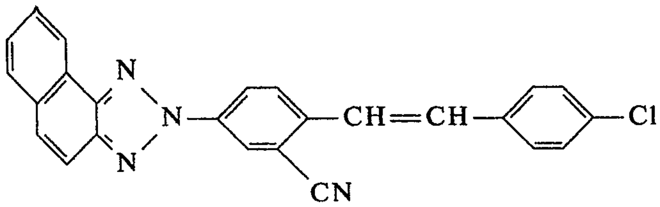

(8)

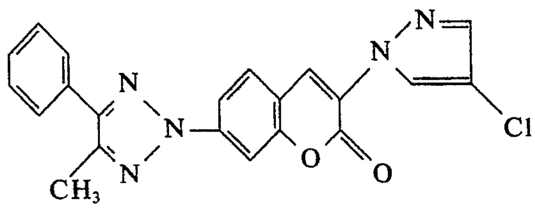

(9)

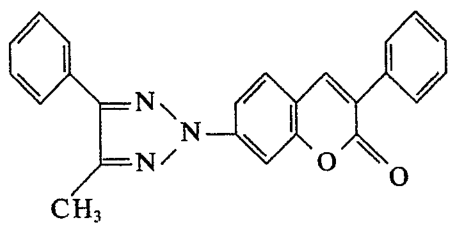

(10)

in welchen $R^1$ und $R^2$ unabhängig voneinander Wasserstoff oder Alkyl, $R^3$ Alkyl oder Alkoxyalkyl, $R^4$ Wasserstoff oder Alkoxy, $R^5$ Alkyl, Hydroxyalkyl, Alkoxyalkyl oder Aralkyl, $R^6$ Alkyl, $R^7$ und $R^8$ Wasserstoff oder Alkyl bedeuten.

2. Mischungen nach Anspruch 1, bestehend aus 2 bis 25 Gew.-% einer Verbindung der Formel (1) und 92 bis 75 Gew.-% einer Verbindung der Formeln (2) bis (10).

3. Mischungen nach Anspruch , bestehend aus einer Verbindung der Formel (1) und einer Verbindung der Formeln (2) und (3).

## Claims

1. Mixtures of optical brighteners consisting of 1 to 60% by weight of a compound of the formula (1)

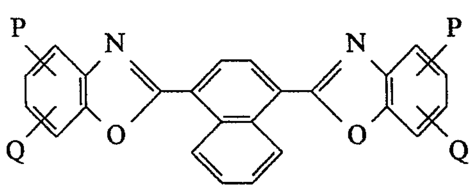

(1)

in which P and Q independently of one another denote halogen, alkyl, phenyl, carbalkoxy, alkylsufonyl or trifluoromethyl, but preferably hydrogen, and 99 to 40% by weight of one or more compounds of the formulae (2) to (10)

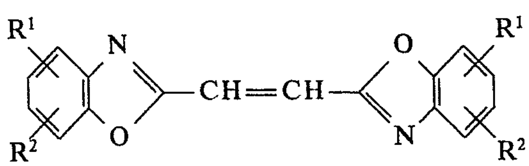

(2)

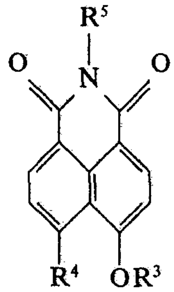

(3)

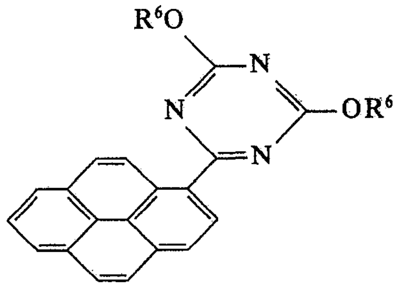

(4)

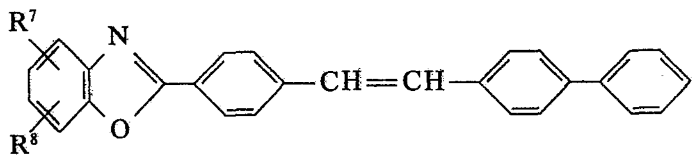

(5)

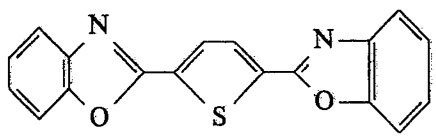

(6)

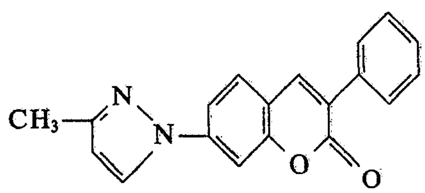

(7)

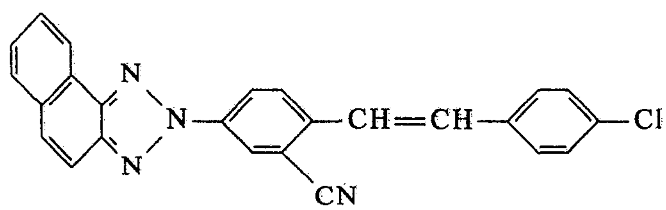

(8)

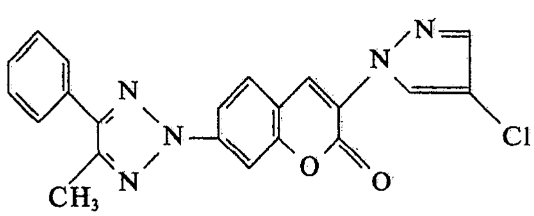

(9)

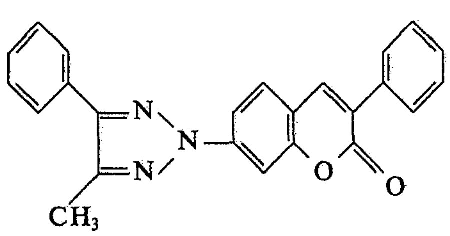

(10)

in which $R^1$ and $R^2$ independently of one another denote hydrogen or alkyl, $R^3$ denotes alkyl or alkoxyalkyl, $R^4$ denotes hydrogen or alkoxy, $R^5$ denotes alkyl, hydroxyalkyl, alkoxyalkyl or aralkyl, $R^6$ denotes alkyl and $R^7$ and $R^8$ denote hydrogen or alkyl.

2. Mixtures as claimed in claim 1, consisting of 2 to 25% by weight of a compound of the formula (1) and 92 to 75% by weight of a compound of one of the formulae (2) to (10).

3. Mixtures according to claim 1, consisting of a compound of the formula (1) and a compound of the formulae (2) and (3).

**Revendications**

1. Mélanges d'azureurs optiques, mélanges qui sont constitués:

— de 1 à 60% en poids d'un composé répondant à la formule (1)

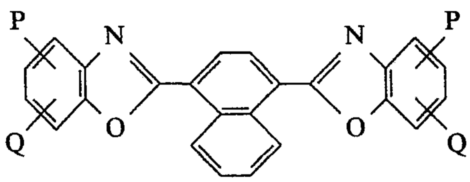

(1)

dans laquelle P et Q représentent chacun, indépendamment l'un de l'autre, un atome d'halogène ou un radical alkyle, phényle, alcoxycarbonyle, alkylsulfonyle ou trifluorométhyle, de préférence un atome d'hydrogène, et

— de 99 à 40% en poids d'un ou plusieurs composés pris parmi ceux qui répondent aux formules (2) à (10)

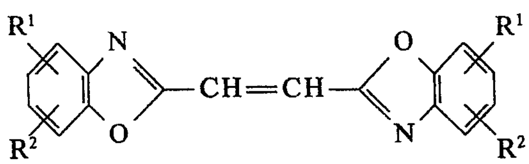

(2)

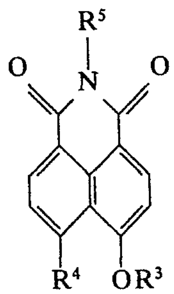

(3)

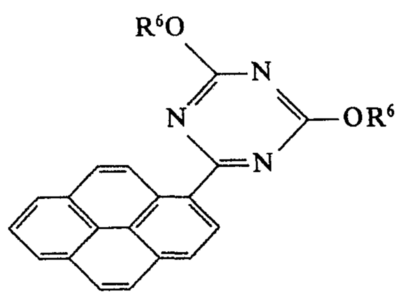

(4)

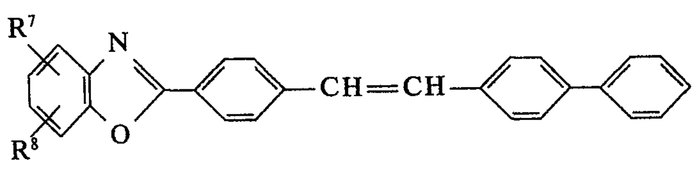

(5)

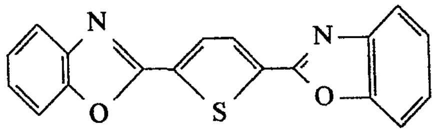

(6)

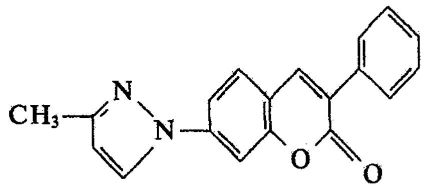

(7)

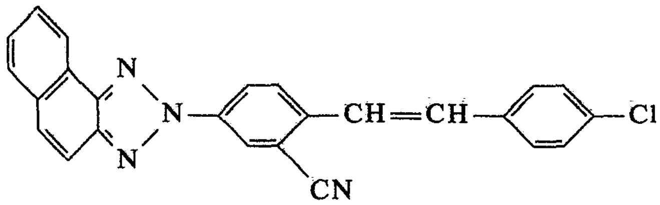

(8)

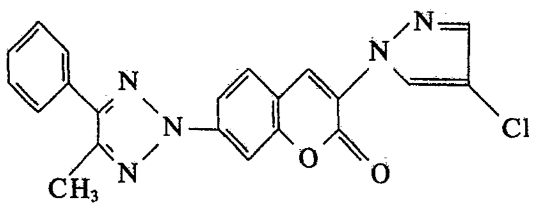

(9)

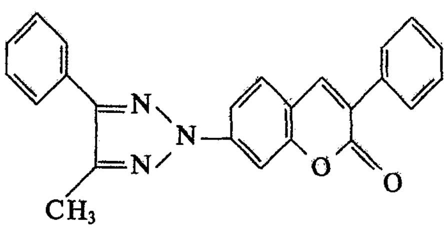

(10)

dans lesquelles $R^1$ et $R^2$ représentent chacun, indépendamment l'un de l'autre, l'hydrogène ou un alkyle, $R^3$ représente un alkyle ou un alcoxy-alkyle, $R^4$ représente l'hydrogène ou un alcoxy, $R^5$ représente un alkyle, un hydroxy-alkyle, un alcoxy-alkyle ou un aralkyle, $R^6$ représente un alkyle, et $R^7$ et $R^8$ représentent chacun l'hydrogène ou un alkyle.

2. Mélanges selon la revendication 1 qui sont constitués de 2 à 25% en poids d'un composé de formule 1 et de 92 à 75% en poids d'un composé répondant à l'une des formules (2) à (10).

3. Mélanges selon la revendication 1 constitués d'un composé de formule (1) et d'un composé répondant à l'une des formules (2) et (3).